# EUROPEAN PATENT APPLICATION

(11) **EP 4 349 152 A1**
(43) Date of publication of application: **10.04.2024**
(21) Application number: 23154032.9
(22) Date of filing: 30.01.2023
(51) Int. Cl.: A01D 34/54, A01D 34/74, A01D 34/58

(54) **ROBOTIC GARDEN TOOL WITH MANUAL BLADE HEIGHT ADJUSTMENT AND MOVABLE BLADE GUARD**

(30) Priority: 31.01.2022 US 202263305048 P; 31.01.2022 US 202263305058 P
(71) Applicant: Techtronic Cordless GP, Anderson, SC 29621 (US)
(72) Inventor: NG, Ho Lam, Kwai Chung (HK)
(74) Representative: Meissner Bolte Partnerschaft mbB

(57) **Abstract**

A robotic garden tool having a deck, a blade, a motor, and a blade height adjustment mechanism. The blade is movably coupled to the deck. The motor is configured to move the blade about an axis of rotation, and the axis of rotation defines an axial direction. The blade height adjustment mechanism includes a manual actuator configured to move in response to manual actuation by an operator. The manual actuator is operably coupled to a cam interface. The cam interface is disposed within a cylindrical volume defined circumferentially by the cam interface and bounded axially by upper and lower distal ends of the cam interface. The axis of rotation of the blade intersects the cylindrical volume. The blade is configured to move at least partially in the axial direction in response to movement of the manual actuator.

## Description

### CROSS-REFERENCE TO RELATED APPLICATIONS

This application claims priority to co-pending U.S. Provisional Patent Application No. 63/305,048, filed on January 31, 2022, and to co-pending U.S. Provisional Patent Application No. 63/305,058, filed on January 31, 2022, the entire contents of all of which are incorporated herein by reference.

### BACKGROUND

The present disclosure relates to a robotic garden tool, such as a robotic lawn mower, having a movable blade for cutting grass or other plants and having a blade guard.

### SUMMARY

In one aspect, the disclosure provides a robotic garden tool having a deck, a blade, a motor, and a blade height adjustment mechanism. The blade is movably coupled to the deck. The motor is configured to move the blade about an axis of rotation, and the axis of rotation defines an axial direction. The blade height adjustment mechanism includes a manual actuator configured to move in response to manual actuation by an operator. The manual actuator is operably coupled to a cam interface. The cam interface is disposed within a cylindrical volume defined circumferentially by the cam interface and bounded axially by upper and lower distal ends of the cam interface. The axis of rotation of the blade intersects the cylindrical volume. The blade is configured to move at least partially in the axial direction in response to movement of the manual actuator.

Alternatively or additionally, in any combination, the axis of rotation of the blade may intersect the manual actuator; the cylindrical volume may define a central axis which may be coaxial with the axis of rotation of the blade; the cylindrical volume may define a central axis, wherein the manual actuator may be rotatable about the central axis; the manual actuator may be rotatable about the axis of rotation of the blade; the cylindrical volume may define a central axis, wherein the central axis may be transverse to the axis of rotation of the blade; the motor may be disposed at least partially within the cylindrical volume; the motor may be disposed within the cylindrical volume; and/or movement of the cam interface about a central axis may cause the blade to move at least 0.25 inches in the axial direction per 30 degrees of rotation of the cam interface.

Alternatively or additionally, in any combination, the robotic garden tool may further include a motor mount configured to support the motor in generally fixed relation thereto, and/or the cam interface may include direct engagement between the manual actuator and the motor mount, and/or the cam interface may include a cam surface and a follower surface; the manual actuator may include a detent mechanism configured to provide audible and/or tactile feedback and to retain the manual actuator in a plurality of discrete angular positions; and/or at least one biasing member configured to exert a force for returning the blade towards a raised position.

In another aspect, the disclosure provides a cutting module for a robotic garden tool. The cutting module includes a motor configured to drive a blade about an axis of rotation. The axis of rotation defining an axial direction. The cutting module also includes a blade height adjustment mechanism including a manual actuator configured to move in response to manual actuation by an operator. The manual actuator is operably coupled to a cam interface. The cam interface is disposed within a cylindrical volume defined circumferentially by the cam interface and bounded axially by upper and lower distal ends of the cam interface. The motor is disposed at least partially within the cylindrical volume. The manual actuator is configured to move the blade in the axial direction.

Alternatively or additionally, in any combination, the axis of rotation of the blade may intersect the manual actuator; the cylindrical volume may define a central axis which may be coaxial with the axis of rotation of the blade; the cylindrical volume may define a central axis, wherein the manual actuator may be rotatable about the central axis; the manual actuator may be rotatable about the axis of rotation of the blade; the cylindrical volume may define a central axis, wherein the central axis may be transverse to the axis of rotation of the blade; the motor may be disposed at least partially within the cylindrical volume; the motor may be disposed within the cylindrical volume; and/or movement of the cam interface about a central axis may cause the blade to move at least 0.25 inches in the axial direction per 30 degrees of rotation of the cam interface.

Alternatively or additionally, in any combination, the robotic garden tool may further include a motor mount configured to support the motor in generally fixed relation thereto, and/or the cam interface may include direct engagement between the manual actuator and the motor mount, and/or the cam interface may include a cam surface and a follower surface; the manual actuator may include a detent mechanism configured to provide audible and/or tactile feedback and to retain the manual actuator in a plurality of discrete angular positions; and/or at least one biasing member configured to exert a force for returning the blade towards a raised position.

In another aspect, the disclosure provides a robotic garden tool movable along a support surface. The robotic garden tool includes a deck and a cutting module supported by the deck. The cutting module includes a driven implement, a motor configured to drive the driven implement in a path defining a volume through which the driven implement passes, and a guard configured to cover at least a portion of the volume and formed as one piece. The driven implement may be configured for height adjustment with respect to the support surface. The guard may be movable independently of the height adjustment.

Alternatively or additionally, in any combination, the guard may be configured to move in a direction at least partially radial with respect to the axis of rotation; the guard may be configured to move at least partially in a direction parallel to the axis of rotation; the guard may be further configured to cover at least a portion of the second planar sides of the two opposing zones with the one integral piece, and/or wherein the path of the blade may be disposed between the second planar sides and the motor; and/or the guard may be configured to move from a first position with respect to the deck to a second position with respect to the deck, and/or wherein the cutting module may further include at least one biasing member disposed between the guard and the deck and/or may be configured to bias the deck towards the first position.

Alternatively or additionally, in any combination, the axis of rotation of the blade may intersect the manual actuator; the cylindrical volume may define a central axis which may be coaxial with the axis of rotation of the blade; the cylindrical volume may define a central axis, wherein the manual actuator may be rotatable about the central axis; the manual actuator may be rotatable about the axis of rotation of the blade; the cylindrical volume may define a central axis, wherein the central axis may be transverse to the axis of rotation of the blade; the motor may be disposed at least partially within the cylindrical volume; the motor may be disposed within the cylindrical volume; and/or movement of the cam interface about a central axis may cause the blade to move at least 0.25 inches in the axial direction per 30 degrees of rotation of the cam interface.

Alternatively or additionally, in any combination, the robotic garden tool may further include a motor mount configured to support the motor in generally fixed relation thereto, and/or the cam interface may include direct engagement between the manual actuator and the motor mount, and/or the cam interface may include a cam surface and a follower surface; the manual actuator may include a detent mechanism configured to provide audible and/or tactile feedback and to retain the manual actuator in a plurality of discrete angular positions; and/or at least one biasing member configured to exert a force for returning the blade towards a raised position.

In another aspect, the disclosure provides a lawn mower having a deck, a blade, a motor, and a blade height adjustment mechanism. The blade is movably coupled to the deck. The motor is configured to move the blade about an axis of rotation, and the axis of rotation defines an axial direction. The blade height adjustment mechanism includes a manual actuator configured to move in response to manual actuation by an operator. The manual actuator is operably coupled to a cam interface. The cam interface is disposed within a cylindrical volume defined circumferentially by the cam interface and bounded axially by upper and lower distal ends of the cam interface. The motor is disposed at least partially within the cylindrical volume. The blade is configured to move in the axial direction in response to movement of the manual actuator.

Alternatively or additionally, in any combination, the axis of rotation of the blade may intersect the manual actuator; the cylindrical volume may define a central axis which may be coaxial with the axis of rotation of the blade; the cylindrical volume may define a central axis, wherein the manual actuator may be rotatable about the central axis; the manual actuator may be rotatable about the axis of rotation of the blade; the cylindrical volume may define a central axis, wherein the central axis may be transverse to the axis of rotation of the blade; the motor may be disposed at least partially within the cylindrical volume; the motor may be disposed within the cylindrical volume; and/or movement of the cam interface about a central axis may cause the blade to move at least 0.25 inches in the axial direction per 30 degrees of rotation of the cam interface.

Alternatively or additionally, in any combination, the robotic garden tool may further include a motor mount configured to support the motor in generally fixed relation thereto, and/or the cam interface may include direct engagement between the manual actuator and the motor mount, and/or the cam interface may include a cam surface and a follower surface; the manual actuator may include a detent mechanism configured to provide audible and/or tactile feedback and to retain the manual actuator in a plurality of discrete angular positions; and/or at least one biasing member configured to exert a force for returning the blade towards a raised position.

In another aspect, the disclosure provides a robotic garden tool movable along a support surface. The robotic garden tool includes a deck and a cutting module supported by the deck. The cutting module includes a blade, a motor configured to drive the blade about an axis of rotation, and a guard configured to cover at least a portion of the blade. The cutting module is configured to move as a unit with respect to the deck.

Alternatively or additionally, in any combination, the cutting module may be mounted to a cutting module mount fixed to the deck with a gap between the cutting module and the cutting module mount, and the gap may allow the movement.

Alternatively or additionally, in any combination, the axis of rotation of the blade may intersect the manual actuator; the cylindrical volume may define a central axis which may be coaxial with the axis of rotation of the blade; the cylindrical volume may define a central axis, wherein the manual actuator may be rotatable about the central axis; the manual actuator may be rotatable about the axis of rotation of the blade; the cylindrical volume may define a central axis, wherein the central axis may be transverse to the axis of rotation of the blade; the motor may be disposed at least partially within the cylindrical volume; the motor may be disposed within the cylindrical volume; and/or movement of the cam interface about a central axis may cause the blade to move at least 0.25 inches in the axial direction per 30 degrees of rotation of the cam interface.

Alternatively or additionally, in any combination, the robotic garden tool may further include a motor mount configured to support the motor in generally fixed relation thereto, and/or the cam interface may include direct engagement between the manual actuator and the motor mount, and/or the cam interface may include a cam surface and a follower surface; the manual actuator may include a detent mechanism configured to provide audible and/or tactile feedback and to retain the manual actuator in a plurality of discrete angular positions; and/or at least one biasing member configured to exert a force for returning the blade towards a raised position.

Other aspects of the disclosure will become apparent by consideration of the detailed description and accompanying drawings.

### BRIEF DESCRIPTION OF THE DRAWINGS

Fig. 1 is a top perspective view of a first implementation of an autonomous lawn mower embodying the disclosure.
Fig. 2 is a cross-sectional view of the autonomous lawn mower of Fig. 1 taken through line 2-2 in Fig. 1.
Fig. 3 is a perspective view of a height adjustment mechanism of the autonomous lawn mower of Fig. 1.
Fig. 4 is a bottom perspective view of a manual actuator and cam surface of the autonomous lawn mower of Fig. 1.
Fig. 5 is the same bottom perspective view of the manual actuator and cam surface of Fig. 3 but further illustrating a cylindrical volume.
Fig. 6 is a perspective view of a portion of the height adjustment mechanism of Fig. 5.
Fig. 7 is a perspective view of the height adjustment mechanism of Fig. 5 in a raised position.
Fig. 8 is a perspective view of the height adjustment mechanism of Fig. 5 in a lowered position.
Fig. 9 is a perspective view of another implementation of a height adjustment mechanism for the autonomous lawn mower of Fig. 1.
Fig. 10 is a top perspective view of a second implementation of an autonomous lawn mower embodying the disclosure.
Fig. 11 is a cross-sectional view of the autonomous lawn mower of Fig. 10 taken through line 11-11 in Fig. 10.
Fig. 12 is a front perspective view of a cutting module of the autonomous lawn mower of Fig. 10.
Fig. 13 is a side view of a blade of the cutting module of Fig. 12.
Fig. 14 is a top view of the blade of Fig. 13.
Fig. 15 is rear perspective view of the cutting module of Fig. 12.
Fig. 16 is a perspective view of an alternate implementation of a guard for the cutting module of Fig. 12.
Fig. 17 is a perspective view of a portion of the cutting module of Fig. 12.
Fig. 18 is a schematic diagram illustrating a control system for the lawn mower of Fig. 10.
Fig. 19 is a side view of another implementation of a cutting module for the autonomous lawn mower of Fig. 10.

### DETAILED DESCRIPTION

Before any implementations of the disclosure are explained in detail, it is to be understood that the disclosure is not limited in its application to the details of construction and the arrangement of components set forth in the following description or illustrated in the following drawings. The disclosure is capable of other implementations and of being practiced or of being carried out in various ways. Also, it is to be understood that the phraseology and terminology used herein are for the purpose of description and should not be regarded as limiting. The terms "approximately", "about", "generally", "substantially", and the like should be understood to mean within standard tolerances, as would be understood by one of ordinary skill in the art, unless stated otherwise herein.

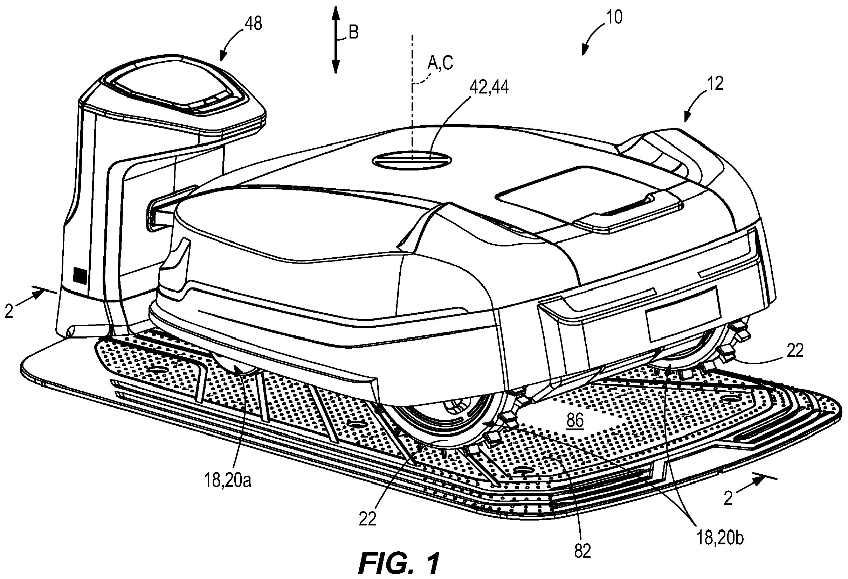

Figs. 1-2 illustrate a garden tool system 10. For example, the garden tool system 10 may include a garden tool 12, such as a lawn mower 12 (as shown), or in other implementations may include a tool for sweeping debris, vacuuming debris, clearing debris, collecting debris, moving debris, etc. Debris may include plants (such as grass, leaves, flowers, stems, weeds, twigs, branches, etc., and clippings thereof), dust, dirt, jobsite debris, snow, and/or the like. For example, other implementations of the garden tool 12 may include a vacuum cleaner, a trimmer, a string trimmer, a hedge trimmer, a sweeper, a cutter, a plow, a blower, a snow blower, etc. In the illustrated implementation, the garden tool system 10 includes the lawn mower 12 and a charging station 48. The garden tool 12 may be autonomous, semi-autonomous, or not autonomous.

For example, the lawn mower may include a controller (not shown) having a programmable processor (e.g., a microprocessor, a microcontroller, or another suitable programmable device), a memory, and a human-machine interface. The memory may include, for example, a program storage area and a data storage area. The program storage area and the data storage area can include combinations of different types of memory, such as read-only memory ("ROM"), random access memory ("RAM") (e.g., dynamic RAM ["DRAM"], synchronous DRAM ["SDRAM"], etc.), electrically erasable programmable read-only memory ("EEPROM"), flash memory, a hard disk, an SD card, or other suitable magnetic, optical, physical, electronic memory devices, or other data structures. The controller may also, or alternatively, include integrated circuits and/or analog devices, e.g., transistors, comparators, operational amplifiers, etc., to execute the logic and control signals described herein. The controller includes a plurality of inputs and outputs to and from various components of the lawn mower. The controller is configured to provide control signals to the outputs and to receive data and/or signals (e.g., sensor data, user input signals, etc.) from the inputs. The inputs and outputs are in communication with the controller, e.g., by way of hard-wired and/or wireless communications such as by satellite, internet, mobile telecommunications technology, a frequency, a wavelength, Bluetooth^{®}, or the like. The controller may include a navigation system, which may include one or more of a global positioning system (GPS), beacons, sensors such as image sensors, ultrasonic sensors, wire sensors, and an algorithm for navigating an area to be mowed. However, in other implementations, the lawn mower may be non-autonomous.

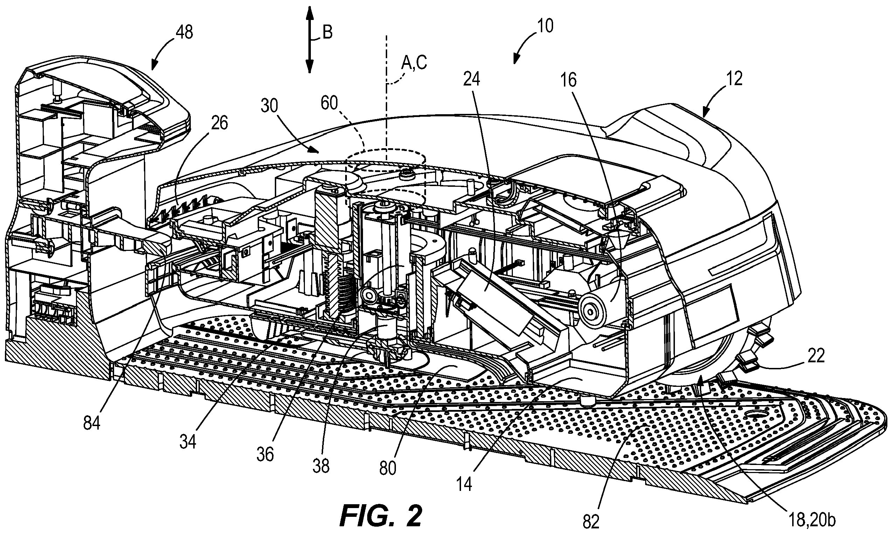

With reference to Fig. 2, the lawn mower 12 includes a deck 14 for supporting various components of the lawn mower 12, as will be described in greater detail below. The lawn mower 12 includes at least one prime mover 16 for providing tractive effort to move the lawn mower 12 across a support surface, such as the charging station 48 or a lawn to be mowed. The at least one prime mover 16 may be supported by the deck 14. For example, the at least one prime mover 16 may include one or more electric motors 16 in the illustrated implementation. However, in other implementations the prime mover 16 may include another type of motor, a gasoline engine, or the like, in any suitable quantity and combination.

The lawn mower 12 also includes a plurality of wheels 18 (Fig. 1), which may be supported by the deck (Fig. 2), for converting the tractive effort into motion of the lawn mower 12 on the support surface. Each of the plurality of wheels 18 supports a tire 22 in the illustrated implementation. However, the plurality of wheels 18 may support any combination of one or more of tires, continuous tracks, or the like in other implementations. The plurality of wheels 18 includes two front wheels 20a and two rear wheels 20b, but other quantities of wheels may be employed in other implementations. In the illustrated implementation, the at least one prime mover 16 includes one of the one or more electric motors dedicated for each of the two rear wheels 20b to apply torque thereto, and the two front wheels 20a are not driven. However, other torque-transmission arrangements can be used in other implementations with any quantity and combination of driven and non-driven wheels, any number of wheels being driven by a single prime mover, and any number of prime movers.

The lawn mower 12 includes a power source 24 (Fig. 2), such as a battery, for powering the at least one prime mover 16 such that the lawn mower 12 can perform a lawn mowing operation in a cordless fashion. The power source 24 may include a lithium-ion battery, and/or other battery chemistries. The power source 24 may be removable from the lawn mower 12. In other implementations, the at least one prime mover 16 may be powered by other power sources, such as solar panels, fuel cells, compressed fluid, fuel, or the like. The lawn mower 12 includes a battery charging contact 26 for receiving a charge from an external power source (not shown) for charging the power source 24.

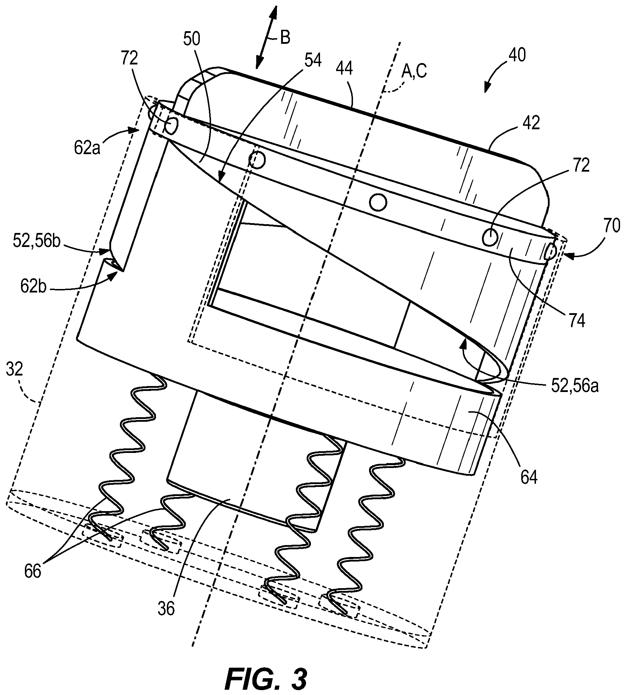

The lawn mower 12 includes a cutting module 30 (some of which is illustrated in Fig. 2 and some of which is illustrated in Figs. 3-8, as will be described below), which may be supported by the deck 14. As best illustrated in Fig. 3, the cutting module 30 includes a cutting module mount 32 fixed with respect to the deck 14 or formed as part of the deck 14. With reference to Fig. 2, the cutting module 30 also includes a blade 34 and a motor 36 configured to move the blade 34 about an axis of rotation A. In the illustrated implementation, the blade 34 is a lawn mower blade; however, in other implementations, the blade 34 includes a reciprocal trimming unit (not shown) having linearly reciprocating trimming blades, and the motor 36 drives the trimming blades of the trimming unit to move reciprocally. In yet other implementations, the blade 34 includes a string (not shown), as in a string trimmer, and the motor 36 drives the string about the axis of rotation A. In yet other implementations, the blade 34 includes a roller blade (not shown), such as a reel blade or squirrel cage blade, and the motor 36 drives the roller blade to roll or rotate about an axis that is generally parallel with the support surface (e.g., generally horizontal). In yet other implementations, the blade 34 includes an auger (not shown), such as snow blower auger, and the motor 36 drives the auger to roll or rotate about an axis that is generally parallel with the support surface (e.g., generally horizontal). In yet other implementations, the blade 34 includes a fan (not shown), such as a blower fan, and the motor 36 drives the fan in rotation. Other types of blades are also possible. Furthermore, other types of driven implements are also possible, including the blades above as well as other non-blade implements that are driven by the motor 36.

The motor 36 includes a rotatable drive shaft 38 operably coupled to the blade 34. In the illustrated implementation, the drive shaft 38 is disposed coaxially with the axis of rotation A. In other implementations, the drive shaft 38 may be disposed parallel with (e.g., offset from) or transverse to the axis of rotation A. The axis of rotation A defines an axial direction B. The axial direction B is typically a vertical direction with respect to the support surface on which the lawn mower 12 rides, e.g., up and down with respect to gravity, when the lawn mower 12 is in use. However, in certain implementations, the axis of rotation A may be tilted relative to the vertical direction, for example by 1 to 10 degrees, preferably by 3 to 8 degrees, and more preferably by 5 to 6 degrees. In certain implementations, the axis of rotation A may be tilted forward in the travelling direction relative to the vertical direction. Said tilt may be achieved by tilting the motor 36, or tilting the blade 34, or tilting the blade 34 and the motor 36.

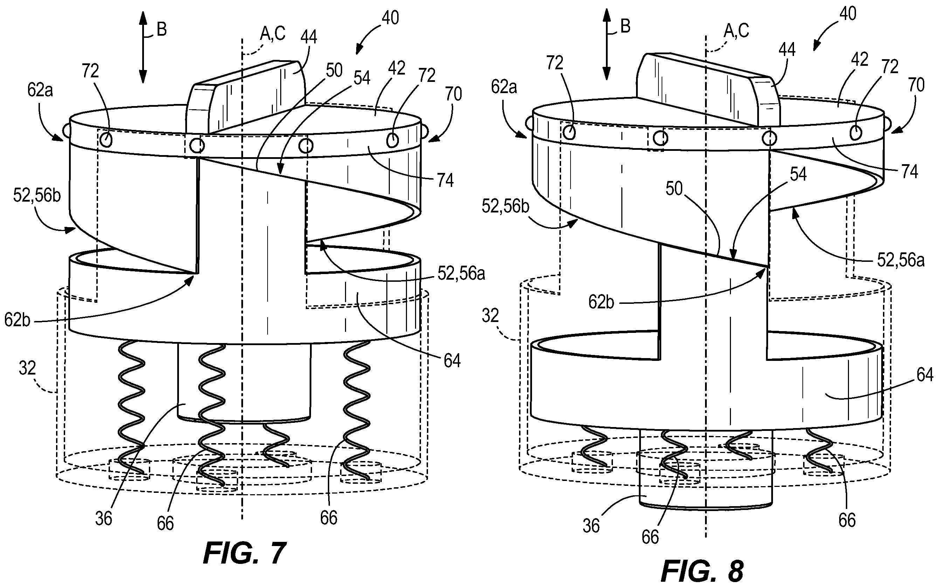

The cutting module 30 also includes a height adjustment mechanism 40 (Figs. 3-8) for moving the blade 34 at least partially up and down in the axial direction B ("at least partially" meaning the blade 34 has at least a component of movement in said direction, which may be vertical or tilted, but may or may not additionally move in other directions). The height adjustment mechanism 40 includes a manual actuator 42 configured to move in response to manual actuation by an operator. The manual actuator 42 is accessible to the operator's hand from outside the lawn mower 12 for manual engagement, as illustrated in Fig. 1. For example, the manual actuator 42 includes a grip surface 44, such as a tab in the illustrated implementation, that is disposed externally on the lawn mower 12 as illustrated in Fig. 1. In the illustrated implementation, the manual actuator 42 is rotatable about the axis of rotation A of the blade. However, in other implementations, the manual actuator 42 may be rotatable about a different axis, which may be parallel to or transverse to the axis of rotation A of the blade. The blade 34 is configured to move in the axial direction B in response to movement of the manual actuator 42, as will be described in greater detail below. In the illustrated implementation, the blade 34 is movable about 1.57 inches (40 mm) in the axial direction B between a raised position (Fig. 7) in which the blade 34 is fully raised and a lowered position (Fig. 8) in which the blade 34 is fully lowered. The blade 34 is movable at least 1.5 inches (38.1 mm) in the axial direction B in some implementations, and may be movable at least 1.57 inches (40 mm), and may be movable more than 1.57 inches (40 mm) in the axial direction B in some implementations. In certain implementations, the cutting height (height from blade to ground) changes between around 1.96 inches (50mm) and 3.54 inches (90mm). In certain implementations, the cutting height changes between 0.78 inches (20mm) and 2.36 inches (60mm).

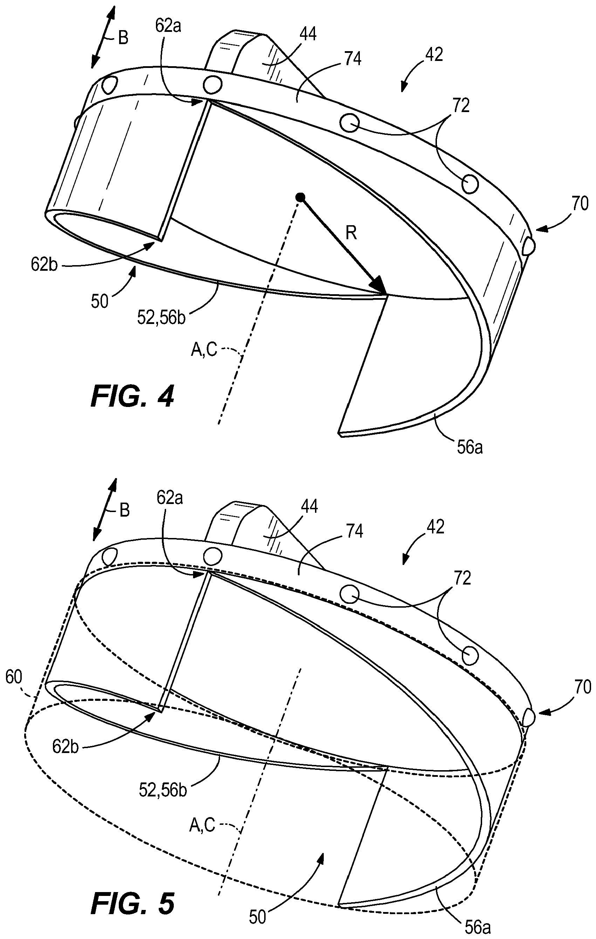

The manual actuator 42 is operably coupled to a cam interface 50. The cam interface 50 includes a cam surface 52 and a follower surface 54. In the illustrated implementation, the cam surface 52 is rotatable and the follower surface 54 translates. The cam interface 50 is at least partially helical. In the illustrated implementation, the cam surface 52 includes two helical surfaces 56a, 56b, each extending 180 degrees about the axis of rotation A and having the same cam profile. In other implementations, the cam surface 52 may have other configurations, such as one helical surface, or three or more helical surfaces. The cam surface 52 has a pitch angle of about 114.3 degrees per inch (with "about" meaning +/- 10 degrees per inch) (the pitch angle is about 4.5 degrees per mm). In some implementations, the pitch angle may be between about 50.8 degrees per inch and about 152.4 degrees per inch (between about 2 degrees per mm and about 6 degrees per mm). The cam surface 52 has a radius R (from the central axis C as shown in Fig. 4) of about 2.36 inches (with "about" meaning +/- 0.2 inches) (the radius R is about 60 mm). In other implementations, the radius R may be between about 0.78 inches and about 9.9 inches (about 20mm - 250mm), or between about 1.1 inches and about 7.9 inches (about 30mm-200mm), or between about 1.5 inches and about 5.9 inches (about 40mm-150mm), or between about 1.9 inches and about 3.9 inches (about 50mm-100mm), or between about 2.3 inches and about 3.2 inches (about 60mm-80mm). For example, the cam interface 50 is configured such that the blade 34 is displaced in the axial direction B about 1.5 inches (38 mm) or more in response to an angular range of 180 degrees of rotation of the manual actuator 42. In other implementations, the blade 34 may be displaced in the axial direction B about 1.57 inches (40 mm) or more in response to 180 degrees of rotation of the manual actuator 42. In other implementations, the cam surface 52 may be translatable rather than rotatable.

With reference to Figs. 4-5, the cam interface 50 is disposed within a cylindrical volume 60 (illustrated in Figs. 2, 4, and 5) defined circumferentially by the cam interface 50 (e.g., by the helical surfaces 56a, 56b) and bounded axially (e.g., in the axial direction B) by upper and lower distal ends 62a, 62b of the cam interface 50. In the illustrated implementation, the axis of rotation A of the blade intersects the cylindrical volume 60. In the illustrated implementation, the cylindrical volume 60 is centered with respect to the axis of rotation A, e.g., the cylindrical volume 60 defines a central axis C, and the central axis C is coaxial with the axis of rotation A of the blade. Thus, in the illustrated implementation the central axis C also defines the axial direction B. In other implementations, the axis of rotation A may be disposed in other locations that intersect the cylindrical volume 60, e.g., parallel to the central axis C or transverse to the central axis C (e.g., if the axis of rotation A is tilted as described above). In yet other implementations, the axis of rotation A may be transverse to the central axis C and need not intersect the cylindrical volume 60. In the illustrated implementation, the axis of rotation A of the blade intersects the manual actuator 42 and, more specifically, is coaxial with the manual actuator 42. Furthermore, the manual actuator 42 is rotatable about the central axis C, and therefore also about the axis of rotation A of the blade. However, in other implementations, other configurations of the manual actuator 42 are possible. For example, the central axis C need not be coaxial with the axis of rotation A of the blade and may be parallel to (offset) or transverse to the axis of rotation A of the blade in other implementations.

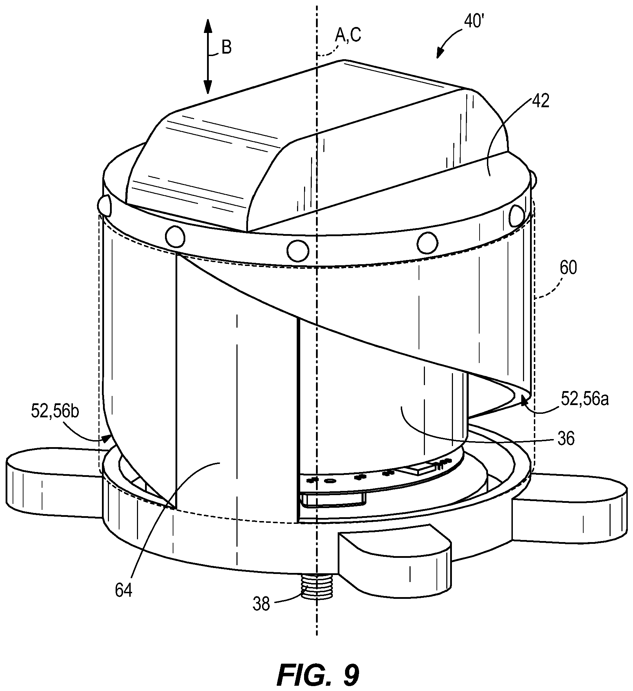

Furthermore, in the illustrated implementation of Fig. 9, the motor 36 is disposed at least partially within the cylindrical volume 60. For example, the motor 36 may be disposed partially within the cylindrical volume 60, mostly within the cylindrical volume 60, or completely within the cylindrical volume 60. Placement of the motor 36 at least partially within the cylindrical volume 60 provides a more compact height adjustment mechanism 40', especially in the axial direction B. All other aspects of the height adjustment mechanism 40' illustrated in Fig. 9 are the same as those described herein with respect to Figs. 1-8, and reference is made to the description of the height adjustment mechanism 40 in Figs. 1-8 herein and need not be repeated.

Returning to the implementation of Figs. 1-8, the height adjustment mechanism 40 includes a motor mount 64 (Figs. 3, 7, and 8) configured to support the motor 36 in a generally fixed relation thereto, which may include a degree of movement or damping to adapt to vibrations, external force, etc., or may be rigidly fixed. The motor mount 64 is axially slidable, in the axial direction B, with respect to the cutting module mount 32. The motor mount 64 may be fixed against rotational movement with respect to the deck 14 such that the motor mount 64 is configured to translate in the axial direction B without rotation with respect to the deck 14. The motor mount 64 is movable between the raised position (Fig. 7) in which the blade 34 is fully raised and the lowered position (Fig. 8) in which the blade 34 is fully lowered. In the illustrated implementation, the motor mount 64 also supports the drive shaft 38 and the blade 34 in fixed relation therewith such that the motor mount 64, the motor 36, the drive shaft 38, and the blade 34 move together as one unit in the axial direction B in response to movement of the manual actuator 42.

In the illustrated implementation, the motor mount 64 includes at least a portion of the cam interface 50. The motor mount 64 is operatively coupled to the follower surface 54. As illustrated, the motor mount 64 includes the follower surface 54 in fixed relation thereto, such that the motor mount 64 and the follower surface 54 translate together as one unit. Furthermore, the manual actuator 42 is rotatable and also includes at least a portion of the cam interface 50. The manual actuator 42 is operatively coupled to the cam surface 52. As illustrated, the manual actuator 42 includes the cam surface 52 in fixed relation thereto, such that the manual actuator 42 and the cam surface 52 rotate together as one unit. Thus, in the illustrated implementation, the cam interface 50 includes (i.e., is at least partially defined by) direct engagement between the manual actuator 42 and the motor mount 64. However, in other implementations, the cam interface 50 is disposed operatively between the manual actuator 42 and the motor mount 64 such that movement of the manual actuator 42 imparts movement to the motor mount 64 with respect to the deck 14 directly or indirectly. In other implementations, the manual actuator 42 may be configured to move a blade mount (not shown, but essentially the same as the motor mount 64) such that the blade 34 is configured to move in the axial direction B with respect to the drive shaft 38 (which remains stationary with respect to the deck 14) in response to movement of the manual actuator 42 without the motor 36 moving with respect to the deck 14.

The height adjustment mechanism 40 also includes one or more biasing members 66 (Figs. 3, 7, and 8), such as coil springs (as illustrated), one or more leaf springs, one or more cup springs, or the like, for biasing the motor mount 64 upwards in the axial direction B (away from the support surface). The one or more biasing members 66 restore the motor mount 64 to its highest position (the raised position) shown in Fig. 7. Specifically, the one or more biasing members 66 are disposed between the cutting module mount 32 and the motor mount 64. In the illustrated implementation, the one or more biasing members 66 are each in direct engagement with the cutting module mount 32 and the motor mount 64; however, indirect engagement may be employed in other implementations. The one or more biasing members 66 allow the cutting module 30 to float with respect to the deck 14, and may therefore allow for movement of the cutting module 30 in more than just the axial direction B.

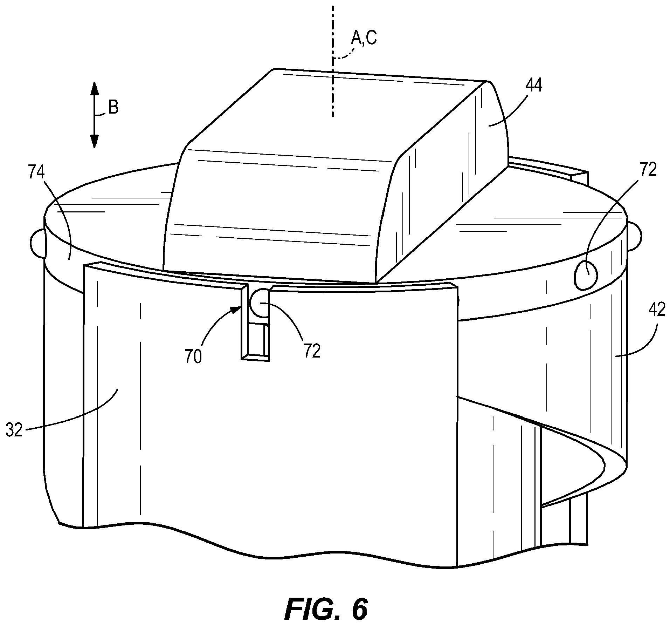

With reference to Figs. 3 and 6, the height adjustment mechanism 40 also includes a detent mechanism 70 operatively coupled to the manual actuator 42 for producing audible and/or tactile feedback and to retain the manual actuator 42 in a plurality of discrete angular positions. Markings (not shown), such as height indicators, may be provided at predetermined intervals of rotation of the manual actuator 42 corresponding to different cutting heights. The manual actuator 42 is also retained at a fixed height (in the axial direction B) with respect to the deck 14 as the manual actuator 42 rotates. In the illustrated implementation, the detent mechanism 70 includes spring-biased balls 72 disposed about a circumference of the manual actuator 42 and extending radially from an outer circumferential surface 74 of the manual actuator 42. The spring-biased balls 72 are biased radially outwards from the outer circumferential surface 74 towards the cutting module mount 32. The illustrated detent mechanism 70 includes ten spring-biased balls 72 arranged at 36 degree intervals around the outer circumferential surface 74; however, any number and spacing of one or more spring-biased balls 72 (or other detent mechanisms) may be employed in other implementations. The detent mechanism 70 engages the cutting module mount 32 and registers in an aperture 76 on the cutting module mount 32. The aperture 76 on the cutting module mount 32 may include a notch (as illustrated), a recess, a groove, a pocket, or the like. In the illustrated implementation, the cutting module mount 32 includes two apertures 76 that are diametrically opposed; however, in other implementations the cutting module mount 32 may include any number of one or more apertures 76 arranged in any suitable fashion for engagement with the detent mechanism 70. In yet other implementations, the detent mechanism 70 may be disposed on the cutting module mount 32 and the one or more apertures 76 may be disposed on the manual actuator 42.

The cutting module 30 also includes a guard 80 (Fig. 2) covering a portion of the blade 34. In the illustrated implementation, the guard 80 is disposed below the blade 34 in the axial direction B, i.e., closer to the support surface than the blade 34. However, in other implementations, the guard 80 may have any suitable configuration for covering a portion of the blade 34 and may cover portions of the blade 34 on a bottom of the blade 34, around circumferential sides of the blade 34, and/or over the blade 34, in any combination. In the illustrated implementation, the guard 80 is configured to move up and down with blade 34 in the axial direction B, in fixed relation therewith, in response to movement of the manual actuator 42. However, in other implementations, the guard 80 may remain fixed with respect to the deck 14 as the blade 34 is adjusted.

The cutting module 30 is modular and can be removed from the lawn mower 12 as a unit and replaced as a unit.

With reference to Figs. 1 and 2, the charging station 48 includes a docking pad 82 and a battery charging terminal 84. The docking pad 82 defines a generally planar surface 86, with "generally planar surface" being defined as providing enough of a portion of a planar surface, i.e., comprised of a single continuous surface or a plurality of separated (discontinuous) surfaces, for the lawn mower 12 to drive up onto and be supported by during a charging operation. The battery charging terminal 84 is configured to engage with the battery charging contact 26 on the lawn mower 12 to provide an electrical connection therebetween for charging the power source 24 (e.g., battery).

In operation, blade height adjustment may be achieved manually by an operator. The operator engages the grip surface 44 of the manual actuator 42 and moves the manual actuator 42 (e.g., rotates the manual actuator 42 in the illustrated implementation). At predefined angular intervals, as defined by the detent mechanism 70, the operator hears and/or feels feedback from the manual actuator 42. The manual actuator 42 may be held in one of the discrete angular positions by the detent mechanism 70 to retain the blade 34 at a corresponding height. For each angular interval of rotation of 36 degrees, the blade height changes by about 0.314 inches (8 mm) (or more in some implementations). The blade height changes by at least 1.5 inches (38 mm) or more in response to the manual actuator 42 being rotated 180 degrees. In some implementations, the blade height changes at least 0.25 inches in the axial direction per 30 degrees of rotation of the manual actuator 42. Thus, the blade height adjustment mechanism advantageously can achieve an appreciable amount of height change for a small amount of manual rotation of the manual actuator 42. The operator rotates the manual actuator 42 in a first direction (e.g., clockwise) to lower the blade 34 and in a second direction (e.g., counterclockwise) to raise the blade 34. The biasing members 66 provide a force to return the blade 34 towards the raised position when the manual actuator 42 is rotated in the second direction.

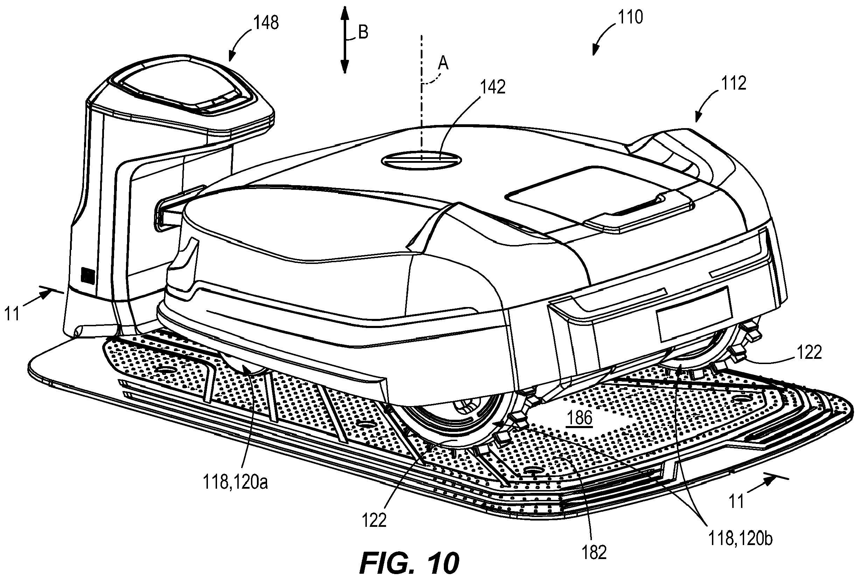

Figs. 10-11 illustrate a second implementation of a garden tool system 110. Any component of the garden tool system 110 may be combined with, or substituted for a like component in, the garden tool system 10, and vice versa.

The garden tool system 110 may include a garden tool 112, such as a lawn mower 112, and a charging station 148. In other implementations, the garden tool 112 may include a tool for sweeping debris, vacuuming debris, clearing debris, collecting debris, moving debris, etc. Debris may include plants (such as grass, leaves, flowers, stems, weeds, twigs, branches, etc., and clippings thereof), dust, dirt, jobsite debris, snow, and/or the like. For example, other implementations of the garden tool 112 may include a vacuum cleaner, a trimmer, a string trimmer, a hedge trimmer, a sweeper, a cutter, a plow, a blower, a snow blower, etc. In the illustrated implementation, the garden tool system 110 includes the lawn mower 112 and a charging station 148. The garden tool 112 may be autonomous, semi-autonomous, or not autonomous.

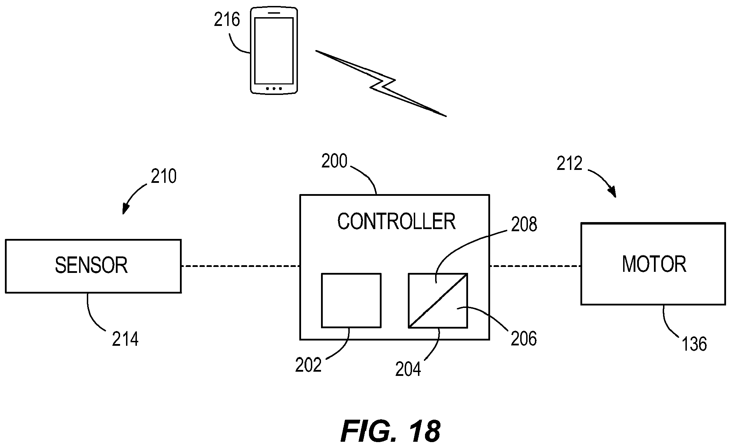

For example, as shown in Fig. 18, the lawn mower 112 may include a controller 200 having a programmable processor 202 (e.g., a microprocessor, a microcontroller, or another suitable programmable device), a memory 204, and a human-machine interface 216 (which may include a mobile device). The memory 204 may include, for example, a program storage area 206 and a data storage area 208. The program storage area 206 and the data storage area 208 can include combinations of different types of memory, such as read-only memory ("ROM"), random access memory ("RAM") (e.g., dynamic RAM ["DRAM"], synchronous DRAM ["SDRAM"], etc.), electrically erasable programmable read-only memory ("EEPROM"), flash memory, a hard disk, an SD card, or other suitable magnetic, optical, physical, electronic memory devices, or other data structures. The controller 200 may also, or alternatively, include integrated circuits and/or analog devices, e.g., transistors, comparators, operational amplifiers, etc., to execute the logic and control signals described herein. The controller 200 includes a plurality of inputs 210 and outputs 212 to and from various components of the lawn mower 112. The controller 200 is configured to provide control signals to the outputs 212 and to receive data and/or signals (e.g., sensor data, user input signals, etc.) from the inputs 210. The inputs 210 and outputs 212 are in communication with the controller 200, e.g., by way of hard-wired and/or wireless communications such as by satellite, internet, mobile telecommunications technology, a frequency, a wavelength, Bluetooth^{®}, or the like. The controller 200 may include a navigation system, which may include one or more of a global positioning system (GPS) , beacons, sensors such as image sensors, ultrasonic sensors, wire sensors, and an algorithm for navigating an area to be mowed. However, in other implementations, the lawn mower 112 may be non-autonomous.

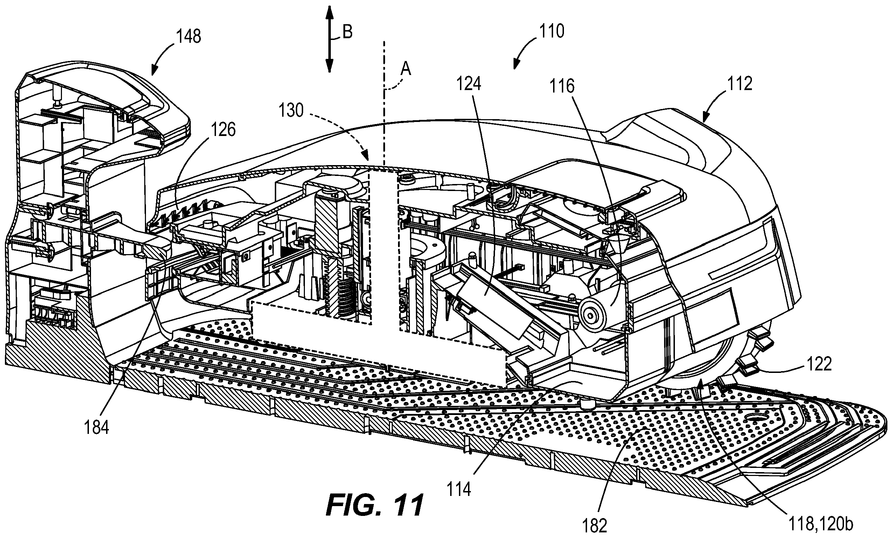

With reference to Fig. 11, the lawn mower 112 includes a deck 114 for supporting various components of the lawn mower 112, as will be described in greater detail below. The lawn mower 112 includes at least one prime mover 116 for providing tractive effort to move the lawn mower 112 across a support surface, such as the charging station 148 or a lawn to be mowed. The at least one prime mover 116 may be supported by the deck 114. For example, the at least one prime mover 116 may include one or more electric motors 116 in the illustrated implementation. However, in other implementations the prime mover 116 may include another type of motor, a gasoline engine, or the like, in any suitable quantity and combination.

The lawn mower 112 also includes a plurality of wheels 118 (Fig. 10), which may be supported by the deck (Fig. 11), for converting the tractive effort into motion of the lawn mower 112 on the support surface. Each of the plurality of wheels 118 supports a tire 122 in the illustrated implementation. However, the plurality of wheels 118 may support any combination of one or more of tires, continuous tracks, or the like in other implementations. The plurality of wheels 118 includes two front wheels 120a and two rear wheels 120b, but other quantities of wheels may be employed in other implementations. In the illustrated implementation, each of the two rear wheels 120b is operatively coupled to its own prime mover 116 (such as two electric motors, one for each respective rear wheel 120b) to apply torque thereto, and the two front wheels 120a are not driven. However, other torque-transmission arrangements can be used in other implementations with any quantity and combination of driven and non-driven wheels, any number of wheels being driven by a single prime mover, and any number of prime movers.

The lawn mower 112 includes a power source 124 (Fig. 11), such as a battery, for powering the at least one prime mover 116 such that the lawn mower 112 can perform a lawn mowing operation in a cordless fashion. The power source 124 may include one or more lithium-ion battery cells, and/or other battery chemistries. The power source 124 may be removable from the lawn mower 112. In other implementations, the at least one prime mover 116 may be powered by other power sources, such as solar panels, fuel cells, compressed fluid, fuel, or the like. The lawn mower 112 includes a battery charging contact 126 for receiving a charge from an external power source (not shown) for charging the power source 124.

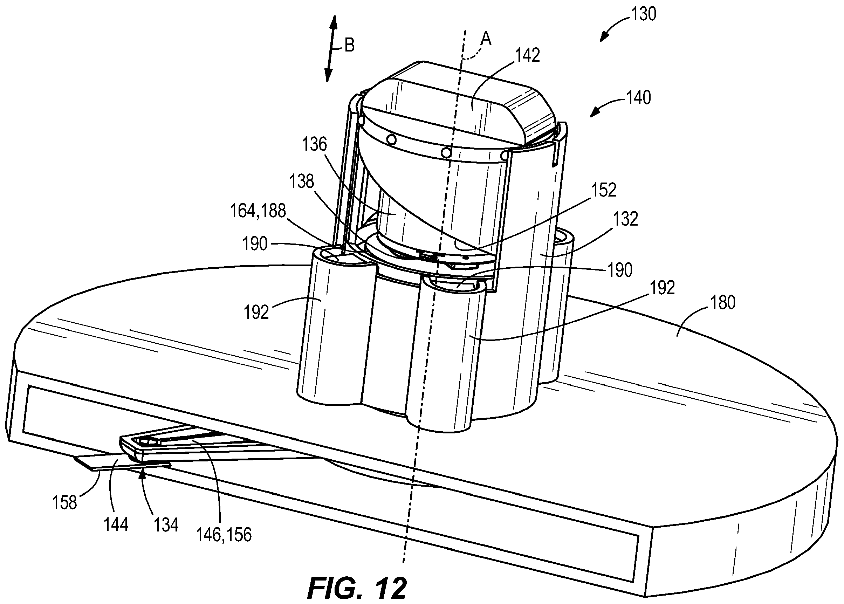

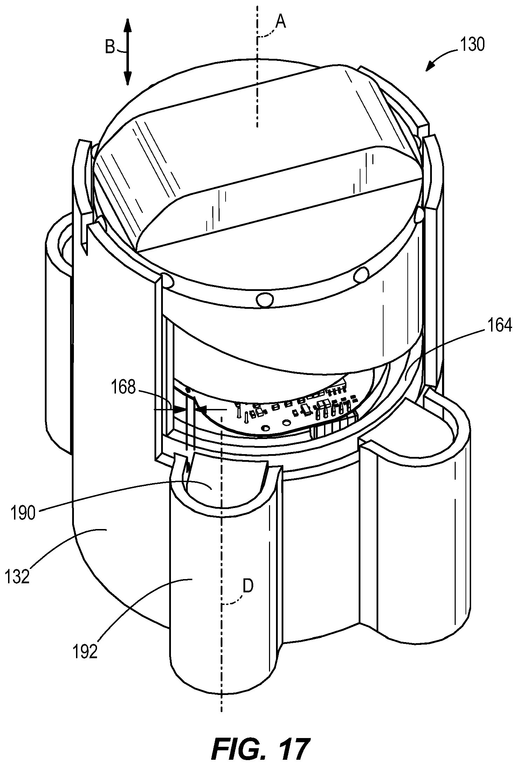

The lawn mower 112 includes a cutting module 130 (Figs. 12-17), which may be supported by a cutting module mount 132 fixed with respect to the deck 114 or formed as part of the deck 114. The cutting module 130 is modular and can be removed from the lawn mower 112 as a unit and replaced as a unit. The cutting module 130 includes a driven implement such as a blade 134 and a motor 136 configured to drive the driven implement. In certain implementations, the motor 136 moves the blade 134 about an axis of rotation A in a path 170 of at least 360 degrees. In certain implementations, the driven implement is a reciprocal trimming unit, the motor 136 drives the trimming blades of the trimming unit to move reciprocally. In yet other implementations, the driven implement includes a string (not shown), as in a string trimmer, and the motor 136 drives the string about the axis of rotation A. In yet other implementations, the driven implement includes a roller blade (not shown), such as a reel blade or squirrel cage blade, and the motor 136 drives the roller blade to roll or rotate about an axis that is generally parallel with the support surface (e.g., generally horizontal). In yet other implementations, the driven implement includes an auger (not shown), such as snow blower auger, and the motor 136 drives the auger to roll or rotate about an axis that is generally parallel with the support surface (e.g., generally horizontal). In yet other implementations, the driven implement includes a fan (not shown), such as a blower fan, and the motor 136 drives the fan in rotation. Other types of blades are also possible. Furthermore, other types of driven implements are also possible, including the blades above as well as other non-blade implements that are driven by the motor 136.

The motor 136 includes a rotatable drive shaft 138 operably coupled to the blade 134. In the illustrated implementation, the drive shaft 138 is disposed coaxially with the axis of rotation A. In other implementations, the drive shaft 138 may be disposed parallel with (e.g., offset from) or transverse to the axis of rotation A. The axis of rotation A defines an axial direction B. The axial direction B is typically a vertical direction with respect to the support surface on which the lawn mower 112 rides, e.g., up and down with respect to gravity, when the lawn mower 112 is in use. However, in certain embodiments, the axis of rotation A may be tilted relative to the vertical direction, for example by 1 to 10 degrees, preferably by 3 to 8 degrees, and more preferably by 5 to 6 degrees. In certain embodiments, the axis of rotation A may be tilted forward in the travelling direction relative to the vertical direction.

The blade 134 (Figs. 12-14) may include one or more blade tips 144 supported by a blade carrier 146. In the illustrated implementation, the blade carrier 146 includes a plurality of blade carrier arms 156, each blade barrier arm 156 supporting one of the blade tips 144. For example, the blade carrier 146 includes three blade carrier arms 156 and three blade tips 144. However, one, two, four, or more blade carrier arms 156 and respective blade tips 144 may be employed in other implementations. In certain implementations, the blade carrier 146 is a blade disk. Each of the blade tips 144 includes a knife edge 158 configured to cut vegetation, such as grass and other plants.

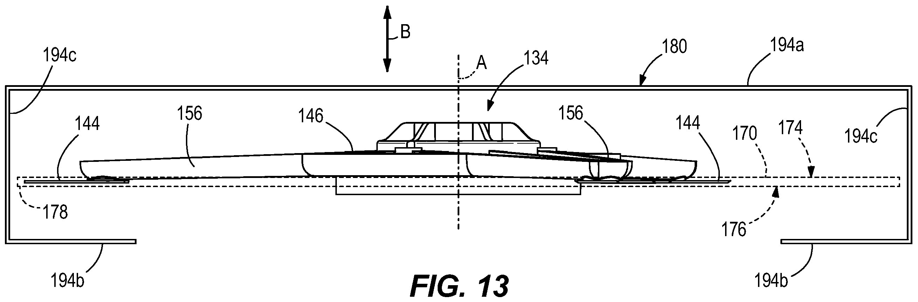

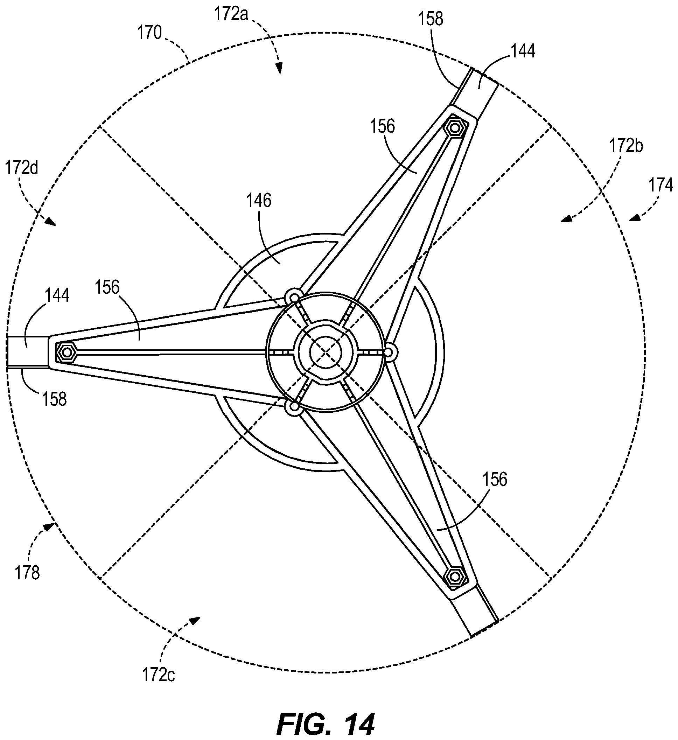

The path 170 of the blade 134 (best illustrated in Figs. 13-14), which may be defined by the path of the blade tips 144 (as shown in Fig. 13), or by the path of the blade tips 144 and the blade carrier arms 156 in some implementations, and at least by the knife edge 158 in other implementations, includes four 90-degree zones 172a-d (Fig. 14), wherein each zone 172a-d has a first planar side 174, a second planar side 176, and a circumferential side 178 extending therebetween. Each zone 172a-d forms a volume through which the blade 134 passes. In other implementations, the path 170 of the blade 134 may be defined by the path of other parts of the blade 134 driven about the axis of rotation A, in any combination. The first planar side 174 is disposed above the path 170 of the blade 134, i.e., between the path 170 of the blade 134 and the motor 136. The second planar side 176 is disposed below the path 170 of the blade 134, i.e., between the path 170 of the blade 134 and the support surface along which the lawn mower 112 rides. In other words, the path 170 of the blade is disposed between the second planar side 176 and the motor 136.

The lawn mower 112 includes a height adjustment mechanism 140 for moving the blade 134 up and down in the axial direction B. The height adjustment mechanism 140 and the height adjustment mechanism 40 are interchangeable. In other words, the height adjustment mechanism 140 may be employed with the garden tool system 10, and the height adjustment mechanism 40 may be employed with the garden tool system 110.

The height adjustment mechanism 140 includes a manual actuator 142 configured to move in response to manual actuation by an operator. The blade 134 is configured to move in the axial direction B in response to movement of the manual actuator 142. The manual actuator 142 is operably coupled to a cam interface 150. The cam interface 150 includes a cam surface 152 and a follower surface 154, which will be described in greater detail below. In the illustrated implementation, the cam surface 152 is rotatable and the follower surface 154 translates. In the illustrated implementation, the motor 136 is disposed at least partially within the manual actuator 142. For example, the motor 136 may be disposed partially within the manual actuator 142, mostly within the manual actuator 142, or completely within the manual actuator 142.

The cutting module 130 includes a motor mount 164 (Figs. 12, 15, and 17) configured to support the motor 136 in fixed relation thereto. In the illustrated implementation, the motor mount 164 also supports the drive shaft 138 and the blade 134 such that the motor mount 164, the motor 136, the drive shaft 138, and the blade 134 move together as one unit in the axial direction B in response to movement of the manual actuator 142.

In the illustrated implementation, the motor mount 164 includes a mounting portion 188 disposed generally perpendicular to the axis of rotation A. The mounting portion 188 directly (or indirectly in other implementations) supports the motor 136. The motor mount 164 also includes lobular projections 190 extending from the mounting portion 188. However, in other implementations, the lobular projections 190 may project from other areas of the motor mount 164. In the illustrated implementation, four lobular projections 190 are employed; however, any number of lobular projections 190 may be employed, such as one, two, three, five, or more. In some implementations, the lobular projections 190 may be formed as a single circumferential flange.

In the illustrated implementation, the motor mount 164 includes at least a portion of the cam interface 150. The motor mount 164 is operatively coupled to the follower surface 154, which projects away from the mounting portion 188 in the axial direction B towards the manual actuator 142. As illustrated, the motor mount 164 includes the follower surface 154 in fixed relation thereto, such that the motor mount 164 and the follower surface 154 translate together as one unit. Furthermore, the manual actuator 142 is rotatable and also includes at least a portion of the cam interface 150. The manual actuator 142 is operatively coupled to the cam surface 152. As illustrated, the manual actuator 142 includes the cam surface 152 in fixed relation thereto, such that the manual actuator 142 and the cam surface 152 rotate together as one unit. Thus, in the illustrated implementation, the cam interface 150 includes (i.e., is at least partially defined by) direct engagement between the manual actuator 142 and the motor mount 164. However, in other implementations, the cam interface 150 is disposed operatively between the manual actuator 142 and the motor mount 164 such that movement of the manual actuator 142 imparts movement to the motor mount 164 with respect to the deck 114 directly or indirectly.

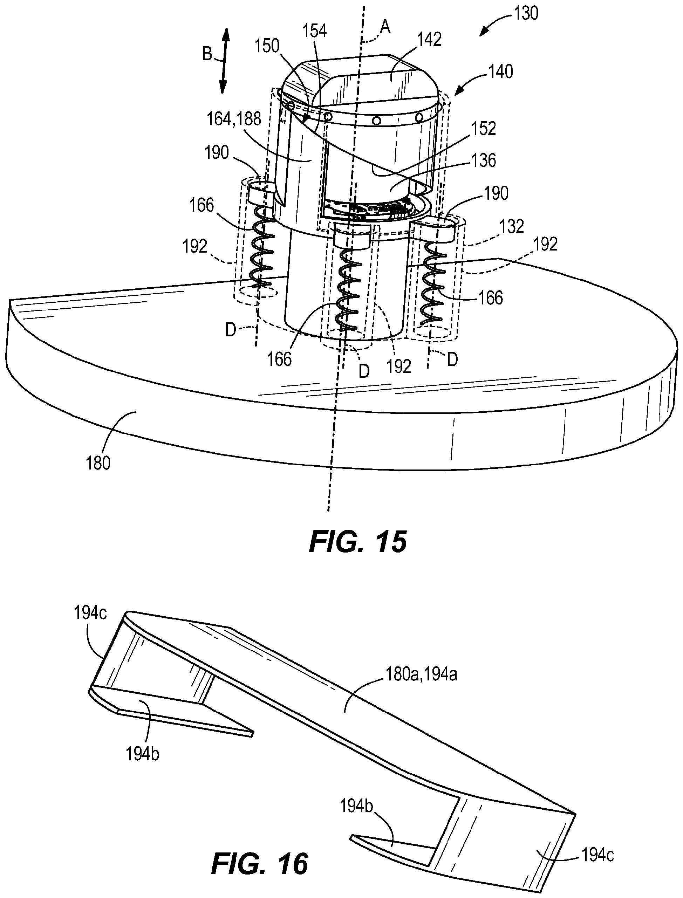

The height adjustment mechanism 140 also includes one or more biasing members 166 (Fig. 15), such as coil springs (as illustrated), one or more leaf springs, one or more cup springs, or the like, for biasing the motor mount 164 upwards in the axial direction B (away from the support surface). The one or more biasing members 166 define a compression axis D (which may be parallel to the axis of rotation A) and are disposed respectively in corresponding lobular receptacles 192 in the cutting module mount 132. Each of the lobular receptacles 192 extends longitudinally parallel to the compression axis D. The one or more biasing members 166 restore the motor mount 164 to its highest position (the raised position) in which the blade 134 is farthest from the support surface. Specifically, the one or more biasing members 166 are disposed between the cutting module mount 132 and the motor mount 164. In the illustrated implementation, the one or more biasing members 166 are each in direct engagement with the cutting module mount 132 and the motor mount 164; however, indirect engagement may be employed in other implementations. More specifically, the biasing members 166 are each in engagement with the lobular projections 190 on the motor mount 164, and with longitudinal ends of the corresponding lobular receptacles 192 on the cutting module mount 132.

The cutting module 130 also includes a guard 180 fixedly coupled to the motor mount 164 for movement therewith as a unit, as illustrated in a first implementation of Figs. 12 and 15. An alternate implementation of the guard 180a is illustrated in Fig. 16. In the first implementation and the alternate implementation, the guard 180, 180a may be formed as one piece with the motor mount 164. To be formed as one piece, the guard 180, 180a and the motor mount 164 are fixed with respect to each other and may be formed together in a single process, formed separately and fixedly joined, or the like. In both implementations, the guard 180, 180a covers a portion of the path 170 of the blade 134. More specifically, in both implementations, the guard 180, 180a, as one piece, covers at least a portion of the circumferential sides 178 of at least two opposing zones (e.g., 172a and 172c, which may be referred to as "left side" and "right side" or "front side" and "rear side" etc. with respect to a direction of travel). In the illustrated implementation of Figs. 12-15, the guard 180, as one piece, covers at least a portion of the circumferential sides of at least three of the four zones (e.g., 172a, 172b, and 172c), or of all four zones 172a-172d in yet other implementations. As illustrated in both implementations, the guard 180, 180a, as one piece, may also cover at least a portion of the second planar side 176 of the at least two opposing zones (e.g., 172a and 172c). In the implementation of Figs. 12-15, the guard 180, as one piece, may also cover at least a portion of the second planar side 176 of at least three of the four zones (e.g., 172a, 172b, 172c), or of all four zones 172a-172d in yet other implementations. In both implementations, the guard 180, 180a as one piece, may also cover at least a portion of the first planar side 174 of the at least two opposing zones (e.g., 172a and 172c). In the implementation of Figs. 12-15, the guard 180, as one piece, may also cover at least a portion of the first planar side 174 of at least three of the four zones (e.g., 172a, 172b, 172c), or of all four zones 172a-172d.

More specifically, with reference to Fig. 13, the guard 180 includes a first portion 194a (a top portion) configured to cover at least a portion of the first planar side 174 in one or more of the zones 172a-172d. The guard 180 also includes a second portion 194b (a bottom portion) configured to cover at least a portion of the second planar side 176 in one or more of the zones 172a-172d as described above. The guard 180 also includes a third portion 194c (a side portion) configured to cover at least a portion of the circumferential sides 178 of one or more of the zones 172a-172d as described above.

In other implementations, the guard 180, 180a may cover the above-mentioned areas as two or more separate pieces rather than as a single piece. The guard 180, 180a may be formed from a polymeric material, such as a plastic, from metal, or from any other suitable material or combination thereof. The detailed construction of the guard 180, 180a is not limited by the illustrated implementations. For example, in other implementations, the guard 180, 180a may be formed from bars (such as metal bars) which may be bent and coupled together, may be formed from a sheet or sheets (such as sheet metal) which may be bent and coupled together, or may be formed in any other suitable fashion from any suitable material.

The guard 180, 180a is configured to move up and down with blade 134 in the axial direction B, in fixed relation therewith, in response to movement of the manual actuator 142. However, in other implementations, the guard 180 need not move axially with the blade 134.

As described above, the cutting module 130 is coupled to the cutting module mount 132 by way of the biasing members 166. The cutting module mount 132 is fixed to or formed as part of the deck 114. The biasing members 166, on the one hand, allow for the manual height adjustment of the blade 134 as described above. On the other hand, the biasing members 166 allow the guard 180, and in this case the cutting module 130 as a unit, to move relative to the cutting module mount 132 (i.e., relative to the deck 114) in a component of movement other than with the manual height adjustment in the axial direction B. The movement, e.g., from a first position with respect to the deck to a second position with respect to the deck, may include any horizontal movement (e.g., any movement in a plane perpendicular to the axis of rotation A of the blade 134), a pivoting movement (e.g., any arcuate movement in two dimensions about a pivot axis, such as but not limited to any pivot axis perpendicular to the axis of rotation A, and/or any spherical movement (like a ball joint) in three dimensions about any pivot point, such as but not limited to any pivot point disposed on the axis of rotation A), downward movement (e.g., in the axial direction B away from the motor 136), and any combination thereof. The movement may have at least a component that is radial with respect to the axis of rotation A, unlike the manual height adjustment of the blade 134 in the axial direction B. The amount of movement is determined by the amount of space (e.g., a gap 168) between the motor mount 164 and the cutting module mount 132. Generally, the gap 168 is disposed between the cutting module 130 and the cutting module mount 132 in any suitable location. In the illustrated implementation, the gap 168 is disposed between the lobular projections 190 on the motor mount 164 and the corresponding lobular receptacles 192 on the cutting module mount 132. The gap 168 is defined radially relative to the compression axis C of the respective biasing member 166. In the illustrated implementation, the gap 168 may be about 0.039 inches (+/- 0.01 inches) (about 1 mm). In some implementations, the gap 168 is between about 0.019 inches (about 0.5 mm) and about 0.04 inches (about 1 mm). In other implementations, the gap 168 may be between about 0.015 inches (about 0.4 mm) and about 0.079 inches (about 2 mm). In other implementations, the gap 168 may be between about 0.011 inches (about 0.3 mm) and about 0.16 inches (about 4 mm). In other implementations, the gap 168 may be between about 0.0078 inches (about 0.2 mm) and about 0.24 inches (about 6 mm). The biasing member 166 is configured to bias the guard 180 towards the first position.

In some implementations, a sensor 214 (Fig. 18), such as a contact switch, is actuatable by contact from any portion of the cutting module 130 during movement of the cutting module 130, preferably movement other than height adjustment movement in the axial direction B as a result of the manual actuator 142. For example, the sensor 214 senses movement of the guard 180 other than the axial movement. More specifically, the sensor 214 (e.g., such as the contact switch) may be actuatable in response to movement of the guard 180 imparted by an external force such as an external object contacting the guard 180, and the guard 180 resultantly moving and contacting the sensor 214. Even more specifically, the sensor 214 may be actuatable in response to the radial component of movement of the guard 180 with respect to the axial direction B. The sensor 214 may be mounted to the deck 114, or to any other suitable location on the lawn mower 112. The sensor 214 may communicate a signal to the controller 200, as illustrated in Fig. 18, in response to which the controller 200 may be programmed to shut off the motor 136. Thus, the movement of the guard 180 triggers a safety feature to cause the lawn mower 112 to shut down.

With reference to Figs. 10 and 11, the charging station 148 includes a docking pad 182 and a battery charging terminal 184. The docking pad 182 defines a generally planar surface 186, with "generally planar surface" being defined as providing enough of a portion of a planar surface, i.e., comprised of a single continuous surface or a plurality of separated (discontinuous) surfaces, for the lawn mower 112 to drive up onto and be supported by during a charging operation. The battery charging terminal 184 is configured to engage with the battery charging contact 126 on the lawn mower 112 to provide an electrical connection therebetween for charging the power source 124 (e.g., battery).

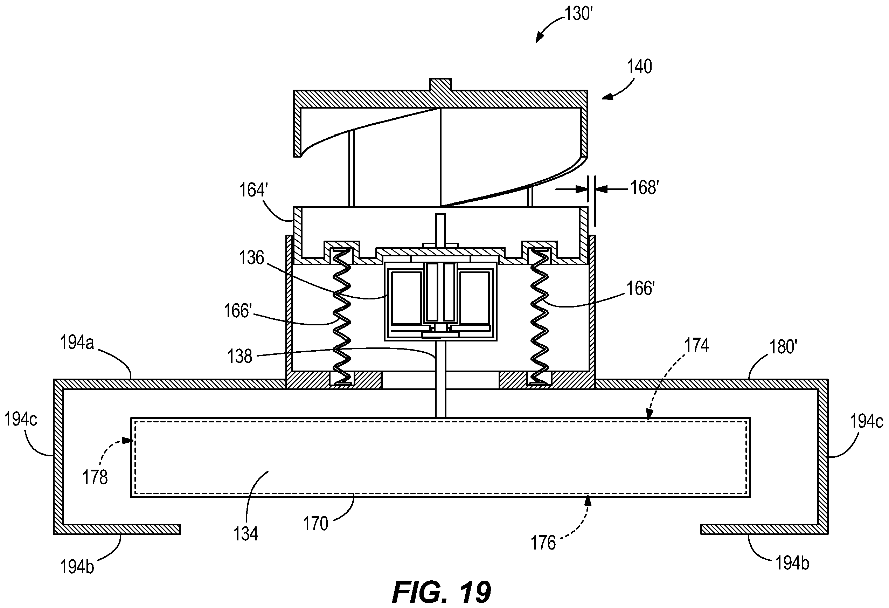

A second implementation of the guard 180' is illustrated in Fig. 19. In the second implementation, only the blade guard 180' is movable rather than the entire cutting module 130'. The movement is defined as any movement other than the height adjustment movement in the axial direction B as a result of the manual actuator 142. The movement, e.g., from a first position with respect to the deck (or with respect to the motor mount 164') to a second position with respect to the deck 114 (or with respect to the motor mount 164'), may include any horizontal movement (e.g., any movement in a plane perpendicular to the axis of rotation A of the blade 134), a pivoting movement (e.g., any arcuate movement in two dimensions about a pivot axis, such as but not limited to any pivot axis perpendicular to the axis of rotation A, and/or any spherical movement (like a ball j oint) in three dimensions about any pivot point, such as but not limited to any pivot point disposed on the axis of rotation A), downward movement (e.g., in the axial direction B away from the motor 136), upward movement (e.g., in the axial direction B towards the motor 136), and any combination thereof. The amount of movement is determined by the space (e.g., a gap 168') between the motor mount 164 and the guard 180'. Specifically, the gap 168' is defined radially relative to the axis of rotation A. In the illustrated implementation, the gap 168' may have any of the same values as described above with respect to the gap 168. The biasing members 166' are configured to bias the guard 180' towards the first position. Specifically, the biasing members 166' are disposed between the guard 180' and the motor mount 164', and may be in direct engagement with the guard 180' and the motor mount 164'. The blade guard 180' is movable relative to the blade 134. The movement is controlled to avoid contact between the blade guard 180' and the blade 134.

In the second implementation, the motor mount 164' and the blade guard 180' are formed as separate pieces. Except where differences are described, other parts of the cutting module 130' are the same and need not be described again; rather, reference is made to the description of the cutting module 130 herein as described with respect to the first implementation of Figs. 12-18.

In operation, the blade guard 180, 180a, 180' is movable subject to external force (e.g., from hitting a rock or other object on the ground, from a changing shape of the terrain itself, or the like). In some implementations, the entire cutting module 130 (which includes the blade guard 180, 180a) is movable, and in other implementations the blade guard 180' is movable alone with respect to the motor mount 164'. The movement improves the ability of the lawn mower 112 to navigate uneven land surface, and the movement may allow triggering of a safety feature such as motor shutoff.

Although the disclosure has been described in detail with reference to preferred implementations, variations and modifications exist within the scope and spirit of one or more independent aspects of the disclosure as described.

Thus, the disclosure provides, among other things, a lawn mower 12, such as an autonomous lawn mower, with manual blade height adjustment. The disclosure also provides, among other things, a lawn mower 112, such as an autonomous lawn mower, with a movable guard 180, 180a, 180'. The disclosure also provides a lawn mower 112, such as an autonomous lawn mower, with a movable cutting module 130.

## Claims

1. A robotic garden tool, comprising:
a deck;
a blade movably coupled to the deck;
a motor configured to move the blade about an axis of rotation, the axis of rotation defining an axial direction;
a blade height adjustment mechanism including a manual actuator configured to move in response to manual actuation by an operator, the manual actuator operably coupled to a cam interface, the cam interface being disposed within a cylindrical volume defined circumferentially by the cam interface and bounded axially by upper and lower distal ends of the cam interface, wherein the axis of rotation of the blade intersects the cylindrical volume, and wherein the blade is configured to move at least partially in the axial direction in response to movement of the manual actuator.

2. The robotic garden tool of claim 1, wherein the axis of rotation of the blade intersects the manual actuator.

3. The robotic garden tool of claim 1, wherein the cylindrical volume defines a central axis, and wherein the central axis is coaxial with the axis of rotation of the blade.

4. The robotic garden tool of claim 1, wherein the cylindrical volume defines a central axis, and wherein the manual actuator is rotatable about the central axis.

5. The robotic garden tool of claim 1, wherein the manual actuator is rotatable about the axis of rotation of the blade.

6. The robotic garden tool of claim 1, wherein the cylindrical volume defines a central axis, and wherein the central axis is transverse to the axis of rotation of the blade.

7. The robotic garden tool of claim 1, wherein the motor is disposed at least partially within the cylindrical volume.

8. The robotic garden tool of claim 1, wherein the motor is disposed within the cylindrical volume.

9. The robotic garden tool of claim 1, further comprising a motor mount configured to support the motor in generally fixed relation thereto, wherein the cam interface includes direct engagement between the manual actuator and the motor mount, the cam interface including a cam surface and a follower surface.

10. The robotic garden tool of claim 1, wherein movement of the cam interface about a central axis causes the blade to move at least 0.25 inches in the axial direction per 30 degrees of rotation of the cam interface.

11. The robotic garden tool of claim 1, wherein the manual actuator includes a detent mechanism configured to provide audible and/or tactile feedback and to retain the manual actuator in a plurality of discrete angular positions.

12. The robotic garden tool of claim 1, further comprising at least one biasing member configured to exert a force for returning the blade towards a raised position.

13. A cutting module for a robotic garden tool, comprising:
a motor configured to drive a blade about an axis of rotation, the axis of rotation defining an axial direction; and
a blade height adjustment mechanism including a manual actuator configured to move in response to manual actuation by an operator, the manual actuator operably coupled to a cam interface, the cam interface being disposed within a cylindrical volume defined circumferentially by the cam interface and bounded axially by upper and lower distal ends of the cam interface, wherein the motor is disposed at least partially within the cylindrical volume, and wherein the manual actuator is configured to move the blade in the axial direction.

14. The cutting module of claim 13, wherein movement of the cam interface about a central axis causes the blade to move at least 0.25 inches in the axial direction per 30 degrees of rotation of the cam interface.

15. The cutting module of claim 13, further comprising at least one biasing member configured to exert a force for returning the blade towards a raised position.

16. A robotic garden tool movable along a support surface, comprising:
a deck; and
a cutting module supported by the deck, the cutting module including
a driven implement,
a motor configured to drive the driven implement in a path defining a volume through which the driven implement passes, and
a guard configured to cover at least a portion of the volume and formed as one piece,
wherein the driven implement is configured for height adjustment with respect to the support surface, and wherein the guard is movable independently of the height adjustment.

17. The robotic garden tool of claim 16, wherein the guard is configured to move in a direction at least partially radial with respect to the axis of rotation.

18. The robotic garden tool of claim 16, wherein the guard is configured to move at least partially in a direction parallel to the axis of rotation.

19. The robotic garden tool of claim 16, wherein the guard is further configured to cover at least a portion of the second planar sides of the two opposing zones with the one integral piece, wherein the path of the blade is disposed between the second planar sides and the motor.

20. The robotic garden tool of claim 16, wherein the guard is configured to move from a first position with respect to the deck to a second position with respect to the deck, and wherein the cutting module further includes at least one biasing member disposed between the guard and the deck and configured to bias the deck towards the first position.
